# EUROPÄISCHE PATENTSCHRIFT

(11) **EP 2 516 106 B1**
(45) Veröffentlichungstag und Bekanntmachung des Hinweises auf die Patenterteilung: **18.09.2013**
(21) Anmeldenummer: 10787301.0
(22) Anmeldetag: 29.11.2010
(51) Int. Cl.: B23P 11/02, F01L 1/047, F16H 53/02

(54) **MONTAGEVORRICHTUNG UND VERFAHREN ZUR MONTAGE EINES WELLEN-HAUBEN-MODULS**
ASSEMBLY DEVICE AND METHOD FOR ASSEMBLING A SHAFT-COVER MODULE
DISPOSITIF DE MONTAGE ET PROCÉDÉ DE MONTAGE D'UN MODULE ARBRE-COUVERCLE

(30) Priorität: 24.12.2009 DE 102009060348
(43) Veröffentlichungstag der Anmeldung: 31.10.2012
(73) Patentinhaber: Volkswagen Aktiengesellschaft, 38440 Wolfsburg (DE)
(72) Erfinder: SCHMECKENBECHER, Klaus, 09235 Burkhardsdorf (DE); HINKEL, Michael, 09125 Chemnitz (DE); HELBIG, Matthias, 09116 Chemnitz (DE); SCHNEIDER, Sebastian, 08132 Mülsen OT Thurm (DE); WINKLER, Marko, 08134 Wildenfels (DE)
(86) Internationale Anmeldenummer: PCT/EP2010/007215
(87) Internationale Veröffentlichungsnummer: WO 2011/076330

(56) Entgegenhaltungen:
- WO-A1-2009/065970
- WO-A1-2010/072194
- DE-A1- 3 525 186
- US-A1- 2006 005 385

## Beschreibung

### Gebiet der Erfindung

Die Erfindung bezieht sich auf eine Montagevorrichtung zur Montage eines Wellen-Hauben-Moduls, das eine Haube und wenigstens eine Funktionswelle mit einer Mehrzahl von Funktionselementen, die auf einer rotierbar in der Haube gelagerten Welle festgelegt sind, aufweist, umfassend
- eine Mehrzahl von axial beabstandet angeordneten Positionierelementen zur ausrichtenden Aufnahme je eines mit einem runden Zentraldurchbruch versehenen Funktionselementes derart, dass die Funktionselemente im ausgerichteten Zustand eine vorgegebene, azimutale Winkellage zueinander einnehmen und ihre Zentraldurchbrüche miteinander fluchten,
- eine Haubenhalterung, mittels deren die wenigstens zwei runde Wändungsdurchbrüche aufweisende Zylinderkopfhaube derart ausgerichtet halterbar ist, dass ihre Wandungsdurchbrüche mit den Zentraldurchbrüchen der ausgerichteten Funktionselemente fluchten,
- eine Leerwellenhalterung, mittels deren eine Leerwelle mit den Zentraldurchbrüchen der Funktionselemente und den Wandungsdurchbrüchen der Haube axial fluchtend halterbar ist, wobei die Positionierelemente und die Haubenhalterung einerseits und die Leerwellenhalterung andererseits im ausgerichteten Zustand relativ zueinander axial verschieblich sind.

Die Erfindung bezieht sich weiter auf ein Verfahren zur Montage eines Wellen-Hauben-Moduls unter Verwendung einer derartigen Montagevorrichtung.

### Stand der Technik

Derartige Montagevorrichtungen und Montageverfahren sind bekannt aus der WO 2009/065970 A1. Die dort offenbarten Vorrichtungen und Verfahren dienen insbesondere der Herstellung von Nockenwellen-Zylinderkopfhauben-Modulen für Verbrennungsmotoren. Hierzu wird auf einer Maschinenplattform eine Reihe axial beabstandeter Positionierscheiben fixiert. Jede Positionierscheibe weist eine Aufnahme für einen Nocken auf. Die Nocken werden als scheibenförmige Elemente mit geschliffener exzentrischer Kontur bereitgestellt. Die Außenkontur entspricht einer berechneten Form, die jeweils für den konkreten Einsatzfall, d.h. den konkreten Verbrennungsmotor, in dem das Modul Einsatz finden soll, optimiert ist. Die Scheiben weisen zudem eine runde Durchgangsbohrung senkrecht zu ihrer Scheibenebene auf. In den Positionierscheiben werden die Nocken so zueinander ausgerichtet, dass ihre relative Winkel- und Axiallage der gewünschten Position auf der Nockenwelle entspricht. Dabei werden die Bohrungen durch die Scheibenkörper zueinander fluchtend ausgerichtet. Weiter wird ein Haubenelement so über die ausgerichteten Nocken gestülpt, dass Bohrungen in den Wänden des Haubenelementes mit den Nockenbohrungen fluchten. Eine relativ zu den Nocken und dem Haubenelement stark unterkühlte Leerwelle wird alsdann in die Bohrungen eingeschoben. Der Außendurchmesser der Leerwelle und die Innendurchmesser der Bohrungen sind so dimensioniert, dass sich die Leerwelle in unterkühltem Zustand kräftefrei oder zumindest kräftearm in die Bohrungen einschieben lässt, wohingegen ihr Durchmesser im nicht unterkühlten Zustand geringfügig größer als der Innendurchmesser der Nockenbohrungen und sehr geringfügig kleiner als der Innendurchmesser der Haubenbohrungen ist. Bei derartiger Dimensionierung der Durchmesser führt ein anschließend eingeleiteter Temperaturausgleich zu einer festen Pressverbindung der Leerwelle mit den Nocken und zu einer spielfreien, rotationsbeweglichen Lagerung der Leerwelle in den Haubenbohrungen.

Das Überstülpen der Haube über die ausgerichteten Nocken setzt voraus, dass das Haubenelement nach "unten", d.h. auf seiner der Montagevorrichtung zugewandten Seite, offen gestaltet ist. Eine derartige Gestaltung des Haubenelementes lässt sich wenigstens im Bereich der Ventilsteuernocken durchaus realisieren. Allerdings weisen typische Nockenwellen außer den Ventilsteuernocken noch zusätzliche Funktionselemente auf. Als ein besonders wichtiges Beispiel sei hier das Ritzel einer Steuerkette oder ein Pumpennocken einer Ölpumpe genannt. Im montierten Zustand des Verbrennungsmotors ist die Ölpumpe als ein an der Zylinderkopfhaube ansetzender Kragen gestaltet, der von einem Pumpendeckel verschlossen wird und in dessen Innerem ein Pumpennocken in relativ geringem Abstand zu dem von dem Kragen gebildeten Pumpengehäuse umläuft. Der Pumpennocken ist auf der Nockenwelle festgelegt und rotiert mit deren Rotation. Fertigungstechnisch besonders günstig wäre es, das Ölpumpengehäuse nicht als separates, an die Zylinderkopfhaube anzuflanschendes Bauteil zu gestalten, sondern dieses einstückig mit dem Haubenelement zur Verfügung zu stellen. Bei einer derartigen Haubengestaltung lässt sich jedoch das bekannte Verfahren, welches, wie oben erläutert, ein nach "unten" offenes Haubenelement voraussetzt, nicht anwenden, da der das Ölpumpengehäuse bildende Kragen den entsprechenden Wandungsdurchbruch im Haubenelement ringförmig umgibt. Es ist somit nicht möglich, den Pumpennocken in einer Positionierscheibe entsprechend den Ventilsteuernocken zu lagern, auszurichten und mit dem Haubenelement zu überstülpen.

### Aufgabenstellung

Es ist die Aufgabe der vorliegenden Erfindung eine gattungsgemäße Montagevorrichtung sowie das bekannte Verfahren derart weiterzubilden, dass die Funktionswelle mit einem randständigen Funktionselement versehen werden kann, welches im montierten Wellen-Hauben-Modul ringförmig von einem Kragen des Haubenelementes umgeben ist.

### Darlegung der Erfindung

Diese Aufgabe wird in Verbindung mit den Merkmalen des Oberbegriffs von Anspruch 1 dadurch gelöst, dass ein axial randständig angeordnetes Positionierelement im ausgerichteten Zustand relativ zu den axial mittiger angeordneten Positionierelementen axial verschieblich ist.

Die Erfindung wird weiter gelöst durch ein Verfahren mit den Merkmalen von Anspruch 6, d.h. durch ein Verfahren zur Montage eines Wellen-Hauben-Moduls, das eine Haube und wenigstens eine Funktionswelle mit einer Mehrzahl von Funktionselementen, die auf einer rotierbar in der Haube gelagerten Welle festgelegt sind, aufweist, unter Verwendung einer erfindungsgemäßen Montagevorrichtung, wobei einer der Wandungsdurchbrüche der Haube von einem nach außen gerichteten Kragen umgeben ist, umfassend die folgenden Schritte:
- Anordnen und Ausrichten der Funktionselemente in den Positionierelementen,
- Anordnen und Ausrichten der Haube in der Haubenhalterung, wobei eine Mehrzahl von Positionierelementen innerhalb der Haube und wenigstens das randständige Positionierelement außerhalb der Haube und benachbart zu dem Kragen der Haube positioniert sind,
- Unterkühlen der Leerwelle relativ zu den Funktionselementen und der Haube,
- Anordnen und Ausrichten der Leerwelle in der Leerwellenhalterung,
- relatives Verschieben der Positionierelemente zu der Leerwellenhalterung, sodass die Leerwelle die Wandungsdurchbrüche der Haube sowie die Zentraldurchbrüche derjenigen Funktionselemente durchsetzt, die in innerhalb der Haube positionierten Positionierelementen angeordnet sind,
- relatives Verschieben des randständigen Positionierelementes zu der Leerwellenhalterung und den innerhalb der Haube positionierten Positionierelementen, sodass der Zentraldurchbruch des in dem randständigen Positionierelement angeordneten Funktionselementes innerhalb des Kragens der Haube positioniert und von der Leerwelle durchsetzt wird,
- Herbeiführen eines Temperaturausgleichs zwischen den Funktionselementen, der Haube und der Leerwelle.

Die Erfindung sieht im Wesentlichen vor, für das randständige Funktionselement ein spezielles Positionierelement zu verwenden, mit dem das randständige Funktionselement zunächst lediglich im Hinblick auf seine Winkellage und seine axial fluchtende Ausrichtung, nicht jedoch im Hinblick auf seine Axialposition ausrichtbar ist. Vielmehr erlaubt es die Erfindung, das randständige Funktionselement in erheblich größerem Abstand von den übrigen Funktionselementen als im fertigen Modul vorgesehen, zu positionieren und erst nach Einführung der Leerwelle in die Durchbrüche der Haubenwandungen und der übrigen Funktionselemente durch relative Axialverschiebung seines Positionierelementes in die axial korrekte Position zu überführen, d.h. seinen Durchbruch auf das innerhalb des Kragens befindliche Ende der Welle aufzufädeln.

Des Weiteren ist es vorteilhaft, wenn die Funktionselemente bei ihrer Anordnung in den Positionierelementen ein relatives Spiel aufweisen, um das Durchführen der Leerwelle zu erleichtern.

Dabei sollte sowohl ein einen Achsversatz zulassendes Spiel als auch ein Spiel bezüglich der endgültigen relativen Winkellage der Funktionselemente auf der Leerwelle vorgesehen werden.

Auf diese Weise ist es in vorteilhafter Weise möglich, die Funktionselemente beim Durchführen der Leerwelle in ihrer Flucht auszurichten und die endgültige Drehwinkellage auf der Leerwelle erst bei eingeführter Leerwelle einzustellen. Dabei sollte ein Verdrehwinkelspiel der Funktionselemente in den Positionierelementen von etwa 1 - 5 Grad, vorzugsweise 3 Grad vorgesehen werden.

Auf diese Weise ist die Toleranzanfälligkeit der erfindungsgemäßen Vorrichtung reduziert, was deren Montage erheblich vereinfacht.

Hierzu ist bevorzugt vorgesehen, dass die axial mittiger angeordneten Positionierelemente auf einer ersten, relativ zu der Leerwellenhalterung axial verschieblichen Maschinenplattform fixiert sind und das randständige Positionierelement auf einer zweiten, relativ zu der Leerwellenhalterung und relativ zu der ersten Maschinenplattform axial verschieblichen Maschinenplattform fixiert ist. Mit anderen Worten wird die bekannte Montagevorrichtung, die zwei relativ zueinander axial verschiebliche Einheiten, nämlich die Leerwellenhalterung einerseits und die erste Maschinenplattform mit den Positionierelementen mit Ausnahme des randständigen Positionierelementes andererseits aufwies, um eine weitere Einheit, nämlich die zweite Maschinenplattform, welche das randständige Positionierelement trägt, erweitert, wobei die zweite Mäschinenplattform relativ zu den beiden erstgenannten Vorrichtungsabschnitten axial verschieblich ist. Dies lässt einen ersten Verfahrensschritt zu, in dem durch Relativverschiebung der Leerwellenhalterung zur ersten Maschinenplattform die Leerwelle in die Durchbrüche der Haubenwandungen und der innerhalb der Haubenwandung positionierten Funktionselemente eingeschoben wird, sowie einen zweiten Verfahrensschritt, in dem das randständige Funktionselement durch Relativbewegung zu den beiden vorgenannten Abschnitten in seine korrekte axiale Position verschoben wird.

Dabei ist es bevorzugt vorgesehen, dass das randständige Positionierelement einen Haltearm mit einer an seinem freien Ende befindlichen Aufnahme für das entsprechende Funktionselement aufweist, der sich von einem mit der zweiten Maschinenplattform verbundenen Sockel in einem Abstand zu der zweiten Maschinenplattform in Richtung auf die übrigen Positionierelemente hin erstreckt. Dies bedeutet mit anderen Worten, dass das randständige Funktionselement so gehaltert wird, dass sein senkrechter Abstand nach "unten", d. h. zu seiner Maschinenplattform hin, frei bleibt, sodass das randständige Funktionselement in den Kragen, der den Wandungsdurchbruch der Haube und das diesen durchragende Endstück der Welle umgibt, durch reine Axialbewegung eingesetzt werden kann.

Grundsätzlich kommt es bei der vorliegenden Erfindung nur auf eine axiale Relativbeweglichkeit der einzelnen Abschnitte der Montagevorrichtung an. Als besonders günstig hat sich jedoch eine Ausführungsform erwiesen, bei der die Leerwellenhalterung auf einem Maschinenfundament fixiert ist, auf dem die als ein Schlitten ausgebildete erste Maschinenplattform axial verschieblich gelagert ist. Dies bedeutet, dass bevorzugt die Leerwellenhalterung fest und die erste Maschinenplattform verschieblich ist.

Bei einer Weiterbildung dieser Ausführungsform ist vorgesehen, dass die zweite Maschinenplattform als ein auf der ersten Maschinenplattform axial verschieblich gelagerter Schlitten ausgebildet ist. Somit wird die axial fluchtende Ausrichtung aller Funktionselemente auf einfache Weise sichergestellt. Zur notwendigen fluchtenden Ausrichtung der Leerwelle zu den Funktionselementen bedarf es somit nicht der separaten Relativausrichtung der Leerwelle mit dem randständigen Funktionselement einerseits und den übrigen Funktionselementen andererseits. Vielmehr kann diese Ausrichtung in einem Ausrichtungsschritt durchgeführt werden.

Wie aus dem Stand der Technik grundsätzlich bekannt, ist der Außendurchmesser der Leerwelle im unterkühlten Zustand bevorzugt kleiner und im nicht-unterkühlten Zustand größer als der Innendurchmesser der Zentraldurchbrüche der Funktionselemente. Dies erlaubt einerseits ein nahezu kräftefreies Einschieben der unterkühlten Leerwelle in die Durchbrüche der Funktionselemente und eine sichere Pressverbindung der Funktionselemente mit der Welle nach Herbeiführung des Temperaturausgleichs. Anders die Durchmesserverhältnisse von Leerwelle und Wandungsdurchbrüchen der Haube: Hier ist bevorzugt vorgesehen, dass der Außendurchmesser der Leerwelle im nicht-unterkühlten Zustand dem Innendurchmesser der Wändungsdurchbrüche der Haube derart entspricht, dass die Welle nach dem Herbeiführen des Temperaturausgleichs spielfrei und rotationsbeweglich in den Wandungsdurchbrüchen der Haube gelagert ist.

Die bevorzugte Anwendung der vorliegenden Erfindung liegt im Bereich des Baus von Verbrennungsmotoren. Insbesondere ist bei der bevorzugten Anwendung vorgesehen, dass die Haube eine Zylinderkopfhaube eines Verbrennungsmotors ist, die in Positionierelementen innerhalb der Haube angeordneten Funktionselemente Ventilsteuemocken des Verbrennungsmotors sind und das in dem randständigen Positionierelement angeordnete Funktionselement ein Pumpennocken einer Ölpumpe ist.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine schematische Darstellung einer erfindungsgemäßen Montagevorrichtung in einer ersten Montagestellung,
- Figur 2:: die Montagevorrichtung von Figur 1 in einer zweiten Montagestellung,
- Figur 3:: die Montagevorrichtung von Figur 1 in einer dritten Montagestellung.
- Figur 4:: eine schematische Darstellung eines Wellen-Hauben-Moduls, hergestellt durch einen Verfahrensablauf, wie in den Figuren 1 bis 3 gezeigt.

### Ausführliche Beschreibung bevorzugter Ausführungsformen

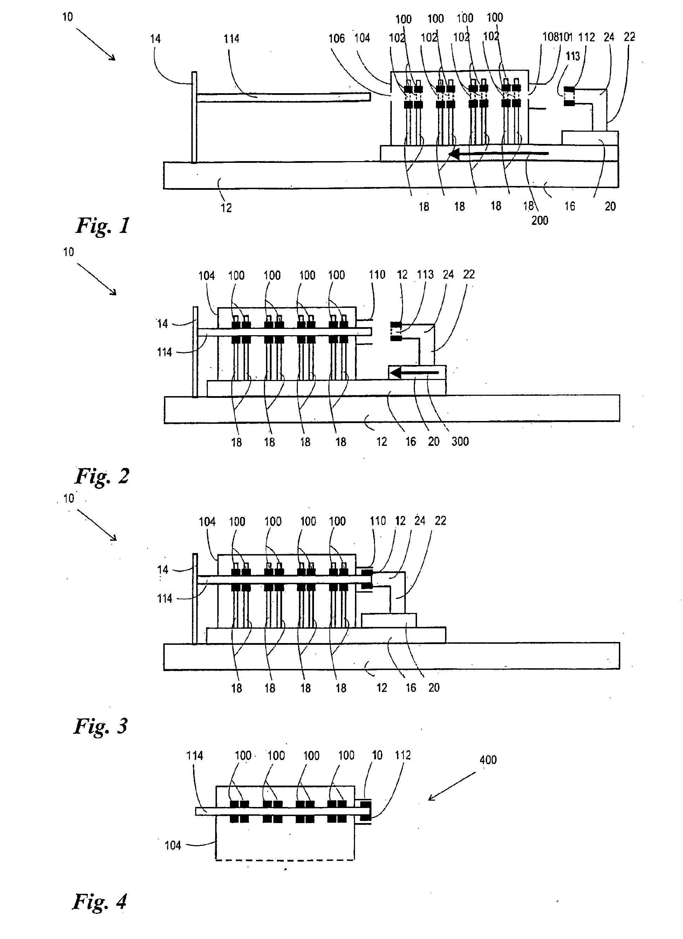

Figur 1 zeigt eine erfindungsgemäße Montagevorrichtung 10 in stark schematisierter Darstellung. Die Montagevorrichtung 10 umfasst ein Maschinenfundament 12, auf dem eine Leerwellenhalterung 14 fest montiert ist. Eine erste Maschinenplattform 16 ist in Form eines Schlittens axial verschieblich auf dem Maschinenfundament 12 gelagert. Auf der ersten Maschinenplattform 16 sind acht Positionierscheiben 18 jeweils paarweise benachbart in axialer Richtung hintereinander fixiert. Die Positionierscheiben 18 tragen nicht näher im Detail dargestellte Ausrichtenester, deren Bedeutung weiter unten erläutert werden soll.

Weiter ist auf der ersten Maschinenplattform 16 eine in den Figuren nicht näher dargestellte Haubenhalterung fixiert, deren Bedeutung ebenfalls weiter unten erläutert werden soll.

Eine zweite Maschinenplattform 20 ist als ein weiterer Schlitten ausgebildet und axial verschieblich auf der ersten Maschinenplattform 16 gelagert. Auf der zweiten Maschinenplattform 20 ist ein Positionierträger 22 fixiert, der einen in axialer Richtung auf die Positionierscheiben 18 hin abgeknickten Trägerarm 24 aufweist, an dessen Spitze ein weiteres, in den Figuren nicht im Detail dargestelltes Ausrichtenest angeordnet ist. Aufgrund der geknickten Form des Positionierträgers 22 ist das Ausrichtenest an der Spitze des Trägerarmes 24 radial allseitig nicht umbaut, insbesondere besteht ein senkrechter Freiraum zwischen dem Ausrichtenest und der zweiten Maschinenplattform 20.

In die Ausrichtenester der Positionierscheiben 18 ist jeweils ein Ventilsteuernocken 100 eingelegt. Die Ventilsteuernocken 100 sind scheibenartig gestaltet, weisen eine exzentrische Außenkontur auf und haben einen runden Zentraldurchbruch 102. Sie werden in den Ausrichtenestern der Positionierscheiben so ausgerichtet, dass ihre Zentraldurchbrüche 102 miteinander fluchten und ihre Exzentrizitäten eine relative Winkellage zueinander einnehmen, die der gewünschten Winkellage der Nockenwelle des zu montierenden Verbrennungsmotors entspricht.

Über die Positionierscheiben 18 und die Ventilsteuernocken 100 ist ein Haubenelement 104 gestülpt und mittels der in den Figuren nicht erkennbaren Haubenhalterung fixiert. Das Haubenelement 104 weist runde Wandungsdurchbrüche 106, 108 auf, die so ausgerichtet sind, dass sie mit den Zentraldurchbrüchen 102 der Ventilsteuernocken 100 fluchten. Einer der Wandungsdurchbrüche, in den Figuren mit dem Bezugszeichen 108 gekennzeichnet, ist von einem Kragen 110 umgeben, der im endmontierten Zustand das Gehäuse einer Ölpumpe bilden soll.

In dem Ausrichtenest an der Spitze des Trägerarmes 24 ist ein Pumpennocken 112, der im endmontierten Zustand das wesentliche Funktionselement der vorgenannten Ölpumpe bilden soll, eingelegt. Der Pumpennocken 112 ist, wie auch die Ventilsteuernocken 100, scheibenartig und mit einem Zentraldurchbruch 113 versehen ausgebildet.

In der Leerwellenhalterung 14 ist eine Leerwelle 114 derart gehaltert, dass sie mit den Wandungsdurchbrüchen 106 des Haubenelementes 104, mit den Zentraldurchbrüchen 102 der Ventilsteuernocken 100 und mit dem Zentraldurchbruch 113 des Pumpennockens 112 fluchtet. Der Durchmesser der Leerwelle 114 ist so gewählt, dass er bei Temperaturgleichheit geringfügig größer ist als der Innendurchmesser der Zentraldurchbrüche 102 der Ventilsteuernocken 100 sowie des Zentraldurchbruchs 113 des Pumpennockens 112 und sehr geringfügig kleiner als der Innendurchmesser der Wandungsdurchbrüche 106 des Haubenelementes 104. Weiter ist der Außendurchmesser der Leerwelle 114 so gestaltet, dass er bei starker Unterkühlung deutlich kleiner ist als die Innendurchmesser aller oben genannter Durchbrüche 102, 106, 113.

Ausgehend von der Konfiguration gemäß Figur 1 wird die Leerwelle 114 stark unterkühlt, z.B. mittels flüssigen Stickstoffs. Natürlich ist es auch möglich, die Leerwelle 114 zuerst zu unterkühlen und dann in der Leerwellenhalterung 14 zu fixieren. Alternativ oder zusätzlich können die Ventilsteuernocken 100 sowie der Pumpennocken 112 gegenüber Raumtemperatur aufgeheizt werden. In jedem Fall ist der Zustand der oben anhand der Relativdurchmesser erläuterten Relativunterkühlung der Leerwelle 114 zu erreichen. Wie durch den Verschiebepfeil 200 angedeutet, wird die zweite Maschinenplattform 16 mit sämtlichen Aufbauten auf die Leerwellenhalterung 14 und der dort fixierten, relativ unterkühlten Leerwelle 114 hin axial verschoben. Aufgrund der oben erläuterten Durchmesserverhältnisse lässt sich die Leerwelle 114 praktisch kräftefrei durch die Wandungs- und Zentraldurchbrüche 106, 113 einschieben. Diese Situation ist in Figur 2 dargestellt.

In einem weiteren Verfahrensschritt wird, wie durch den Verschiebepfeil 300 angedeutet, die zweite Maschinenplattform 20 relativ zum Maschinenfundament 12 und der ersten Maschinenplattform 16 mit sämtlichen Aufbauten auf letztere hin axial verschoben. Hierdurch wird der Pumpennocken 112 mit seinem Zentraldurchbruch 113 auf das innerhalb des Kragens 110 befindliche Ende der Leerwelle 114 aufgefädelt. Diese Situation ist in Figur 3 dargestellt.

Anschließend wird ein Temperaturausgleich zwischen der Leerwelle 114 und den Ventilsteuerund Pumpennocken 100, 112 sowie dem Haubenelement 104 herbeigeführt, sodass sich eine feste Pressverbindung zwischen der Leerwelle 114 und den Nocken 100, 112 ergibt, die resultierende Nockenwelle jedoch in den Wandungsdurchbrüchen 106 des Haubenelementes 104 spielfrei und drehbeweglich gelagert ist. Das resultierende Haubenmodul 400, welches dann von der erfindungsgemäßen Montagevorrichtung gelöst werden kann, ist in Figur 4 dargestellt.

Natürlich stellen die in der speziellen Beschreibung diskutierten und in den Figuren gezeigten Ausführungsformen nur illustrative Ausführungsbeispiele der vorliegenden Erfindung dar. Insbesondere sind Art, Angabe und Gestalt der Funktionselemente, insbesondere der Nocken 100, 112 an die Erfordernisse des Einzelfalls anzupassen.

### Bezugszeichenliste

- 10: Montagevorrichtung
- 12: Maschinenfundament
- 14: Leerwellenhalterung
- 16: erste Maschinenplattform
- 18: Positionierscheibe
- 20: zweite Maschinenplattform
- 22: Positionierträger
- 24: Trägerarm von 22
- 100: Ventilsteuernocken
- 102: Zentraldurchbruch von 100
- 104: Haubenelement
- 106: Wandungsdurchbruch von 104
- 108: Wandungsdurchbruch von 104
- 110: Kragen um 108
- 112: Pumpennocken
- 113: Zentraldurchbruch von 112
- 114: Leerwelle
- 200: Verschiebepfeil
- 300: Verschiebepfeil
- 400: Wellen-Hauben-Modul

## Patentansprüche

1. Montagevorrichtung zur Montage eines Wellen-Hauben-Moduls (400), das eine Haube (104) und wenigstens eine Funktionswelle mit einer Mehrzahl von Funktionselementen (100, 112), die auf einer rotierbar in der Haube (104) gelagerten Welle (114) festgelegt sind, aufweist, umfassend
- eine Mehrzahl von axial beabstandet angeordneten Positionierelementen (18, 22) zur ausrichtenden Aufnahme je eines mit einem Zentraldurchbruch (102, 113) versehenen Funktionselementes (100, 112) derart, dass die Funktionselemente (100, 112) im ausgerichteten Zustand eine vorgegebene, azimutale Winkellage zueinander einnehmen und ihre Zentraldurchbrüche (102, 113) miteinander fluchten,
- eine Haubenhalterung, mittels deren die wenigstens zwei Wandungsdurchbrüche (106, 108) aufweisende Zylinderkopfhaube (104) derart ausgerichtet halterbar ist, dass ihre Wandungsdurchbrüche (106, 108) mit den Zentraldurchbrüchen (102, 113) der ausgerichteten Funktionselemente (100, 112) fluchten,
- eine Leerwellenhalterung (14), mittels deren eine Leerwelle (114) mit den Zentraldurchbrüchen (102, 113) der Funktionselemente (100, 112) und den Wandungsdurchbrüchen (106, 108) der Haube (104) axial fluchtend halterbar ist, wobei die Positionierelemente (18, 22) und die Haubenhalterung einerseits und die Leerwellenhalterung (14) andererseits im ausgerichteten Zustand relativ zueinander axial verschieblich sind, **dadurch gekennzeichnet, dass** ein axial randständig angeordnetes Positionierelement (22) im ausgerichteten Zustand relativ zu den axial mittiger angeordneten Positionierelementen (18) axial verschieblich ist.

2. Montagevorrichtung nach Anspruch 1, **dadurch gekennzeichnet, dass** die axial mittiger angeordneten Positionierelemente (18) auf einer relativ zu der Leerwellenhalterung (14) axial verschieblichen ersten Maschinenplattform (16) fixiert sind und das randständige Positionierelement (22) auf einer relativ zu der Leerwellenhalterung (14) und relativ zu der ersten Maschinenplattform (16) axial verschieblichen, zweiten Maschinenplattform (20) fixiert ist.

3. Montagevorrichtung nach Anspruch 2, **dadurch gekennzeichnet, dass** das randständige Positionierelement (22) einen Haltearm (24) mit einer an seinem freien Ende befindlichen Aufnahme für das entsprechende Funktionselement (112) aufweist, der sich von einem mit der zweiten Maschinenplattform (20) verbundenen Sockel in einem Abstand zu der zweiten Maschinenplattform (20) in Richtung auf die übrigen Positionierelemente (18) hin erstreckt.

4. Montagevorrichtung nach einem der Ansprüche 2 bis 3, **dadurch gekennzeichnet, dass** die Leerwellenhalterung (14) auf einem Maschinenfundament (12) fixiert ist, auf dem die als ein Schlitten ausgebildete erste Maschinenplattform (16) axial verschieblich gelagert ist.

5. Montagevorrichtung nach Anspruch 4, **dadurch gekennzeichnet, dass** die zweite Maschinenplattform (20) als ein auf der ersten Maschinenplattform (16) axial verschieblich gelagerter Schlitten ausgebildet ist.

6. Verfahren zur Montage eines Wellen-Hauben-Moduls (400), das eine Haube (104) und wenigstens eine Funktionswelle mit einer Mehrzahl von Funktionselementen (100, 112), die auf einer rotierbar in der Haube (104) gelagerten Welle (114) festgelegt sind, aufweist, unter Verwendung einer Montagevorrichtung (10) nach einem der Ansprüche 3 bis 5, wobei einer der Wandungsdurchbrüche (106, 108) der Haube (104) von einem nach außen gerichteten Kragen (110) umgeben ist, umfassend die folgenden Schritte:
- Anordnen und Ausrichten der Funktionselemente (100, 112) in den Positionierelementen (18, 22),
- Anordnen und Ausrichten der Haube (104) in der Haubenhalterung, wobei eine Mehrzahl von Positionierelementen (18) innerhalb der Haube (104) und wenigstens das randständige Positionierelement (22) außerhalb der Haube (104) und benachbart zu dem Kragen (110) der Haube (104) positioniert sind,
- Unterkühlen der Leerwelle (114) relativ zu den Funktionselementen (100, 112) und der Haube (104),
- Anordnen und Ausrichten der Leerwelle (114) in der Leerwellenhalterung,
- relatives Verschieben der Positionierelemente (18, 22) zu der Leerwellenhalterung (14), sodass die Leerwelle (114) die Wandungsdurchbrüche (106, 108) der Haube (104) sowie die Zentraldurchbrüche (102) derjenigen Funktionselemente (100) durchsetzt, die in innerhalb der Haube (104) positionierten Positionierelementen (18) angeordnet sind,
- relatives Verschieben des randständigen Positionierelementes (22) zu der Leerwellenhalterung (14) und den innerhalb der Haube (104) positionierten Positionierelementen (18), sodass der Zentraldurchbruch (113) des in dem randständigen Positionierelement (22) angeordneten Funktionselementes (112) innerhalb des Kragens (10) der Haube (104) positioniert und von der Leerwelle (114) durchsetzt wird,
- Herbeiführen eines Temperaturausgleichs zwischen den Funktionselementen (100, 112) der Haube (104) und der Leerwelle (114).

7. Verfahren nach Anspruch 6, **dadurch gekennzeichnet, dass** der Außendurchmesser der Leerwelle (114) im unterkühlten Zustand kleiner und im nicht-unterkühlten Zustand größer als der Innendurchmesser der Zentraldurchbrüche (102, 113) der Funktionselemente (100, 112) ist.

8. Verfahren nach einem der Ansprüche 6 bis 7, **dadurch gekennzeichnet, dass** der Außendurchmesser der Leerwelle (114) im nicht-unterkühlten Zustand dem Innendurchmesser der Wandungsdurchbrüche (106, 108) der Haube (104) derart entspricht, dass die Welle nach dem Herbeiführen des Temperaturausgleichs spielfrei in den Wandungsdurchbrüchen (106, 108) der Haube (104) gelagert ist.

9. Verfahren nach einem der Ansprüche 6 bis 7, **dadurch gekennzeichnet, dass** die Haube (104) eine Zylinderkopfhaube eines Verbrennungsmotors ist, die in Positionierelementen (18) innerhalb der Haube (104) angeordneten Funktionselemente (100) Ventilsteuernocken des Verbrennungsmotors sind und das in dem randständigen Positionierelement (22) angeordnete Funktionselement (112) ein Pumpennocken einer Ölpumpe ist.

## Claims

1. Mounting apparatus for mounting a shaft/cover module (400) which has a cover (104) and at least one functional shaft with a plurality of functional elements (100, 112) which are fixed on a shaft (114) which is mounted rotatably in the cover (104), comprising
- a plurality of positioning elements (18, 22) which are arranged such that they are spaced apart axially in order to receive, in an orienting manner, in each case one functional element (100, 112), which is provided with a central aperture (102, 113), in such a way that the functional elements (100, 112) assume a predefined, azimuthal angular position with respect to one another in the oriented state and their central apertures (102, 113) are aligned with one another,
- a cover holder, by means of which the cylinder-head cover (104) which has at least two wall apertures (106, 108) can be held in an oriented manner such that its wall apertures (106, 108) are aligned with the central apertures (102, 113) of the oriented functional elements (100, 112),
- an empty-shaft holder (14), by means of which an empty shaft (114) can be held such that it is aligned axially with the central apertures (102, 113) of the functional elements (100, 112) and the wall apertures (106, 108) of the cover (104), the positioning elements (18, 22) and the cover holder on one side and the empty-shaft holder (14) on the other side being displaceable axially relative to one another in the oriented state, **characterized in that**, in the oriented state, a positioning element (22) which is arranged axially at the edge can be displaced axially relative to the positioning elements (18) which are arranged axially more centrally.

2. Mounting apparatus according to Claim 1, **characterized in that** the positioning elements (18) which are arranged axially more centrally are fixed on a first machine platform (16) which can be displaced axially relative to the empty-shaft holder (14), and the edge-side positioning element (22) is fixed on a second machine platform (20) which can be displaced axially relative to the empty-shaft holder (14) and relative to the first machine platform (16).

3. Mounting apparatus according to Claim 2, **characterized in that** the edge-side positioning element (22) has a holding arm (24) with a receptacle, situated at its free end, for the corresponding functional element (112), which holding arm (24) extends from a base, connected to the second machine platform (20), at a spacing from the second machine platform (20) in the direction of the remaining positioning elements (18).

4. Mounting apparatus according to either of Claims 2 and 3, **characterized in that** the empty-shaft holder (14) is fixed on a machine foundation (12), on which the first machine platform (16) which is configured as a slide is mounted such that it can be displaced axially.

5. Mounting apparatus according to Claim 4, **characterized in that** the second machine platform (20) is configured as a slide which is mounted on the first machine platform (16) such that it can be displaced axially.

6. Method for mounting a shaft/cover module (400) which has a cover (104) and at least one functional shaft with a plurality of functional elements (100, 112) which are fixed on a shaft (114) which is mounted rotatably in the cover (104), using a mounting apparatus (10) according to one of Claims 3 to 5, one of the wall apertures (106, 108) of the cover (104) being surrounded by an outwardly directed collar (110), comprising the following steps:
- arranging and orienting of the functional elements (100, 112) in the positioning elements (18, 22),
- arranging and orienting of the cover (104) in the cover holder, a plurality of positioning elements (18) being positioned inside the cover (104) and at least the edge-side positioning element (22) being positioned outside the cover (104) and adjacently with respect to the collar (110) of the cover (104),
- cooling of the empty shaft (114) relative to the functional elements (100, 112) and the cover (104),
- arranging and orienting of the empty shaft (114) in the empty-shaft holder,
- relative displacing of the positioning elements (18, 22) with respect to the empty-shaft holder (14), with the result that the empty shaft (114) penetrates the wall apertures (106, 108) of the cover (104) and the central apertures (102) of those functional elements (100) which are arranged in positioning elements (18) which are positioned inside the cover (104),
- relative displacing of the edge-side positioning element (22) with respect to the empty-shaft holder (14) and the positioning elements (18) which are positioned inside the cover (104), with the result that the central aperture (113) of the functional element (112) which is arranged in the edge-side positioning element (22) is positioned inside the collar (10) of the cover (104) and is penetrated by the empty shaft (114),
- bringing about of a temperature equalization between the functional elements (100, 112) of the cover (104) and the empty shaft (114).

7. Method according to Claim 6, **characterized in that** the external diameter of the empty shaft (114) is smaller in the cooled state and greater in the non-cooled state than the internal diameter of the central apertures (102, 113) of the functional elements (100, 112).

8. Method according to either of Claims 6 and 7, **characterized in that**, in the non-cooled state, the external diameter of the empty shaft (114) corresponds to the interval diameter of the wall apertures (106, 108) of the cover (104) in such a way that, after the temperature equalization is brought about, the shaft is mounted without play in the wall apertures (106, 108) of the cover (104).

9. Method according to either of Claims 6 and 7, **characterized in that** the cover (104) is a cylinder-head cover of an internal combustion engine, the functional elements (100) which are arranged in positioning elements (18) inside the cover (104) are valve actuating cams of the internal combustion engine and the functional element (112) which is arranged in the edge-side positioning element (22) is a pump cam of an oil pump.

## Revendications

1. Dispositif de montage pour le montage d'un module arbre-couvercle (400) qui comprend un couvercle (104) et au moins un arbre fonctionnel pourvu d'une pluralité d'éléments fonctionnels (100, 112) qui sont fixés sur un arbre (114) monté à rotation dans le couvercle (104), comportant
- une pluralité d'éléments de positionnement (18, 22) disposés de manière espacée axialement pour recevoir en l'orientant un élément fonctionnel respectif (100, 112) pourvu d'une ouverture centrale (102, 113), de telle sorte que les éléments fonctionnels (100, 112), à l'état orienté, occupent une position angulaire azimutale prédéfinie les uns par rapport aux autres et que leurs ouvertures centrales (102, 113) soient alignées les unes avec les autres,
- un support de couvercle au moyen duquel le couvercle de culasse (104) comprenant au moins deux ouvertures de paroi (106, 108) peut être supporté de manière orientée de telle sorte que ses ouvertures de paroi (106, 108) soient alignées avec les ouvertures centrales (102, 113) des éléments fonctionnels orientés (100, 112),
- un support d'arbre creux (14) au moyen duquel un arbre creux (114) peut être supporté de manière alignée axialement avec les ouvertures centrales (102, 113) des éléments fonctionnels (100, 112) et les ouvertures de paroi (106, 108) du couvercle (104), les éléments de positionnement (18, 22) et le support de couvercle d'une part, et le support d'arbre creux (14) d'autre part, étant déplaçables axialement les uns par rapport aux autres à l'état orienté, **caractérisé en ce qu'**un élément de positionnement (22) disposé de manière axialement périphérique est, à l'état orienté, déplaçable axialement par rapport aux éléments de positionnement (18) disposés axialement plus au centre.

2. Dispositif de montage selon la revendication 1, **caractérisé en ce que** les éléments de positionnement (18) disposés axialement plus au centre sont fixés sur une première plateforme de machine (16) déplaçable axialement par rapport au support d'arbre creux (14) et l'élément de positionnement périphérique (22) est fixé sur une deuxième plateforme de machine (20) déplaçable axialement par rapport au support d'arbre creux (14) et par rapport à la première plateforme de machine (16).

3. Dispositif de montage selon la revendication 2, **caractérisé en ce que** l'élément de positionnement périphérique (22) présente un bras de support (24) pourvu d'un logement, situé à son extrémité libre, pour l'élément fonctionnel correspondant (112), lequel bras de support s'étend à partir d'un socle relié à la deuxième plateforme de machine (20), à une certaine distance de la deuxième plateforme de machine (20), en direction des éléments de positionnement restants (18).

4. Dispositif de montage selon l'une quelconque des revendications 2 à 3, **caractérisé en ce que** le support d'arbre creux (14) est fixé sur un socle de machine (12) sur lequel est montée de manière déplaçable axialement la première plateforme de machine (16) réalisée sous forme de chariot.

5. Dispositif de montage selon la revendication 4, **caractérisé en ce que** la deuxième plateforme de machine (20) est réalisée sous forme de chariot monté de manière déplaçable axialement sur la première plateforme de machine (16).

6. Procédé de montage d'un module arbre-couvercle (400) qui comprend un couvercle (104) et au moins un arbre fonctionnel pourvu d'une pluralité d'éléments fonctionnels (100, 112) qui sont fixés sur un arbre (114) monté à rotation dans le couvercle (104), en utilisant un dispositif de montage (10) selon l'une quelconque des revendications 3 à 5, l'une des ouvertures de paroi (106, 108) du couvercle (104) étant entourée par un collet (110) tourné vers l'extérieur, le procédé comportant les étapes suivantes :
- disposition et orientation des éléments fonctionnels (100, 112) dans les éléments de positionnement (18, 22),
- disposition et orientation du couvercle (104) dans le support de couvercle, une pluralité d'éléments de positionnement (18) étant disposée à l'intérieur du couvercle (104) et au moins l'élément de positionnement périphérique (22) étant positionné à l'extérieur du couvercle (104) et à proximité du collet (110) du couvercle (104),
- refroidissement de l'arbre creux (114) par rapport aux éléments fonctionnels (100, 112) et au couvercle (104),
- disposition et orientation de l'arbre creux (114) dans le support d'arbre creux,
- déplacement relatif des éléments de positionnement (18, 22) par rapport au support d'arbre creux (14), de telle sorte que l'arbre creux (114) traverse les ouvertures de paroi (106, 108) du couvercle (104) ainsi que les ouvertures centrales (102) des éléments fonctionnels (100) qui sont disposés dans des éléments de positionnement (18) positionnés à l'intérieur du couvercle (104),
- déplacement relatif de l'élément de positionnement périphérique (22) par rapport au support d'arbre creux (14) et aux éléments de positionnement (18) positionnés à l'intérieur du couvercle (104), de telle sorte que l'ouverture centrale (113) de l'élément fonctionnel (112) disposé dans l'élément de positionnement périphérique (22) soit positionnée à l'intérieur du collet (10) du couvercle (104) et soit traversée par l'arbre creux (114),
- réalisation d'un équilibrage de la température entre les éléments fonctionnels (100, 112) du couvercle (104) et l'arbre creux (114).

7. Procédé selon la revendication 6, **caractérisé en ce que** le diamètre extérieur de l'arbre creux (114) est, à l'état refroidi, inférieur au diamètre intérieur des ouvertures centrales (102, 113) des éléments fonctionnels (100, 112) et est, à l'état non refroidi, supérieur à ce diamètre intérieur.

8. Procédé selon l'une quelconque des revendications 6 à 7, **caractérisé en ce que** le diamètre extérieur de l'arbre creux (114) correspond, à l'état non refroidi, au diamètre intérieur des ouvertures de paroi (106, 108) du couvercle (104), de telle sorte que l'arbre soit monté sans jeu dans les ouvertures de paroi (106, 108) du couvercle (104) après la réalisation de l'équilibrage de la température.

9. Procédé selon l'une quelconque des revendications 6 à 7, **caractérisé en ce que** le couvercle (104) est un couvercle de culasse d'un moteur à combustion interne, les éléments fonctionnels (100) disposés dans des éléments de positionnement (18) à l'intérieur du couvercle (104) sont des cames de commande de soupape du moteur à combustion interne et l'élément fonctionnel (112) disposé dans l'élément de positionnement périphérique (22) est une came de pompe d'une pompe à huile.
